(19) 

**Europäisches Patentamt**

**European Patent Office**

**Office européen des brevets**

(11) **EP 4 715 012 A1**

(12) **EUROPEAN PATENT APPLICATION**
published in accordance with Art. 153(4) EPC

(43) Date of publication:
25.03.2026 Bulletin 2026/13

(21) Application number: 24811031.4

(22) Date of filing: 16.05.2024

(51) International Patent Classification (IPC):
*C08L 77/00* (2006.01)   *C08K 3/04* (2006.01)
*C08K 7/06* (2006.01)   *C08L 101/00* (2006.01)

(52) Cooperative Patent Classification (CPC):
**C08K 3/04; C08K 7/06; C08L 77/00; C08L 101/00**

(86) International application number:
**PCT/JP2024/018201**

(87) International publication number:
**WO 2024/242024 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 19.05.2023 JP 2023083508

(71) Applicant: Kuraray Co., Ltd.
**Kurashiki-shi, Okayama 710-0801 (JP)**

(72) Inventors:
• **NANYA, Atsushi**
  **Tsukuba-shi, Ibaraki 305-0841 (JP)**
• **OKAMOTO, Minoru**
  **Kurashiki-shi, Okayama 710-0801 (JP)**

(74) Representative: **Müller-Boré & Partner**
**Patentanwälte PartG mbB**
**Friedenheimer Brücke 21**
**80639 München (DE)**

(54) **POLYAMIDE COMPOSITION**

(57) The present invention relates to a polyamide composition containing a polyamide (A) and a carbon fiber-containing filler (B), in which Fe content in the polyamide composition is 3 to 300 ppm by mass with respect to a total amount of the polyamide (A), a molded article containing the polyamide composition, and a method for producing the polyamide composition.

Processed by Luminess, 75001 PARIS (FR)

**Description**

Technical Field

The present invention relates to a polyamide composition, a method for producing the same, and a molded article containing the polyamide composition.

Background Art

Polyamide is often used as a substitute for metal for the purpose of weight reduction or the like due to its high heat resistance and mechanical properties, and is widely used in various fields. In addition, it is known that various properties are obtained by a resin composition containing a polyamide and other components.

For example, PTL 1 discloses a resin composition containing a polyamide, a polyphenylene ether, and a hydrogenated product of an ABA type and/or an ABA type block copolymer composed of an aromatic vinyl compound block (A) and a conjugated diene compound block (B), characterized in that the composition contains 0.1 to 2% by weight of titanium dioxide and/or carbon black, and further contains 1 to 20 ppm by weight of a copper component as a copper concentration. In addition, it is described that, when the resin composition contains an iron component as an additional component, it is desirable that an appropriate amount of the iron component (content in terms of $Fe_2O_3$) does not exceed 300 ppm by weight with respect to the final composition. It is disclosed that this makes it possible to improve the impact strength in the case of retention in a molding machine.

In addition, PTL 2 discloses a polyamide resin composition containing hexacyanoferric acid alkali metal salt with respect to a specific polyamide resin.

Citation List

Patent Literature

PTL 1:JP 2005-89673 A
PTL 2:WO 2018/101163

Summary of Invention

Technical Problem

On the other hand, in a case where a molded article obtained by using a polyamide composition is used as a metal substitute, the molded article is often used under a severe environment, and thus, for example, a problem that the molded article turns yellow (yellowing) due to the use under a high-temperature environment often occurs. However, none of the above-described documents refers to the effect of suppressing discoloration of a molded article using a polyamide composition.

Therefore, there is a need for a polyamide composition capable of producing a molded article capable of suppressing discoloration during use in a high-temperature environment.

Therefore, the present invention is directed to solving the above-described problems, and an object of the present invention is to provide a polyamide composition capable of obtaining a molded article capable of suppressing discoloration in a high-temperature environment.

Solution to Problem

The present invention includes the following inventions.

[1] A polyamide composition containing a polyamide (A) and a carbon fiber-containing filler (B),
in which Fe content in the polyamide composition is 3 to 300 ppm by mass with respect to a total amount of the polyamide (A).
[2] The polyamide composition according to [1], in which K content in the polyamide composition is 3 ppm by mass or more with respect to a total amount of the polyamide (A).
[3] The polyamide composition according to [1] or [2], in which Ni content in the polyamide composition is 0.04 ppm by mass or more with respect to a total amount of the polyamide (A).

[4] The polyamide composition according to any one of [1] to [3], in which Co content in the polyamide composition is 0.01 ppm by mass or more with respect to a total amount of the polyamide (A).

[5] The polyamide composition according to any one of [1] to [4], in which the carbon fiber-containing filler (B) contains an Fe component, and the Fe component is at least a part or all of the Fe content in the polyamide composition.

[6] The polyamide composition according to any one of [1] to [5], in which the carbon fiber-containing filler (B) is a recycled carbon fiber.

[7] The polyamide composition according to any one of [1] to [6], in which Fe content in the carbon fiber-containing filler (B) is 5 ppm by mass or more with respect to a total amount of the carbon fiber-containing filler (B).

[8] The polyamide composition according to any one of [1] to [7], in which the carbon fiber-containing filler (B) contains at least one selected from the group consisting of a thermosetting resin, a modified product of a thermosetting resin, a thermoplastic resin, and a modified product of a thermoplastic resin.

[9] The polyamide composition according to any one of [1] to [8], in which the polyamide (A) is a polyamide containing a diamine unit (X) and a dicarboxylic acid unit (Y),

the diamine unit (X) contains a diamine unit derived from an aliphatic diamine, and
the dicarboxylic acid unit (Y) contains a dicarboxylic acid unit derived from at least one selected from the group consisting of an aliphatic dicarboxylic acid, an alicyclic dicarboxylic acid, and an aromatic dicarboxylic acid.

[10] The polyamide composition according to [9], in which the diamine unit (X) contains a diamine unit derived from an aliphatic diamine having 6 to 12 carbon atoms.

[11] The polyamide composition according to [9] or [10], in which the diamine unit (X) contains a diamine unit derived from an aliphatic diamine having 9 or 10 carbon atoms.

[12] The polyamide composition according to any one of [1] to [11], in which a content of the carbon fiber-containing filler (B) is 1 to 50% by mass with respect to a total content of the polyamide (A) and the carbon fiber-containing filler (B).

[13] The polyamide composition according to any one of [1] to [12], in which a total content of the polyamide (A) and the carbon fiber-containing filler (B) is 80 to 100% by mass with respect to a total amount of the polyamide composition.

[14] A molded article containing the polyamide composition according to any one of [1] to [11].

[15] A method for producing a polyamide composition, including mixing a polyamide (A) and a carbon fiber-containing filler (B) to obtain a polyamide composition,

in which Fe content in the polyamide composition is 3 to 300 ppm by mass with respect to a total amount of the polyamide (A).

Advantageous Effects of Invention

According to the present invention, it is possible to provide a polyamide composition capable of obtaining a molded article capable of suppressing discoloration in a high-temperature environment.

Description of Embodiments

It will be explained in the following based on an example of the embodiments of the present invention. However, the embodiments shown below are examples for embodying the technical idea of the present invention, and the present invention is not limited to the following description.

The present invention also includes the embodiments in which the items described in the description herein are arbitrary selected or arbitrary combined.

In the description herein, preferred regulations are arbitrary selected, and it can be said that the combination of the preferred regulations is more preferable.

In the description herein, unless otherwise specified, the description of "XX to YY" as a numerical range means "XX or more and YY or less". For example, in a case where "10 to 90" is simply described as a numerical range, it represents a range of 10 or more and 90 or less.

In the description herein, with respect to numerical ranges (content of each component, values calculated from each component, physical properties, and the like), lower limit values and upper limit values described in stages can be each independently combined. For example, from the description of "preferably 10 to 90, more preferably 30 to 60" for the same item, the "preferable lower limit value (10)" and the "more preferable upper limit value (60)" can be combined to obtain "10 to 60".

In addition, regarding the numerical range, for example, based on the description of "preferably 10 to 90, more preferably 30 to 60", only the lower limit value side can be defined as "10 or more" or "30 or more" without particularly defining the upper limit value, and similarly, only the upper limit value side can be defined as "90 or less" or "60 or less" without particularly defining the lower limit value.

In the same manner as described above, for example, from the description of "preferably 10 or more, more preferably 30 or more" and the description of "preferably 90 or less, more preferably 60 or less" for the same item, the "preferable lower limit value (10)" and the "more preferable upper limit value (60)" can be combined to obtain "10 or more and 60 or less". Further, similarly to the above, only the lower limit value side can be defined as "10 or more" or "30 or more", and similarly, only the upper limit value side can be defined as "90 or less" or "60 or less".

In addition, in the description herein, "ZZ unit" (here, "ZZ" indicates a monomer) means "constitutional unit derived from ZZ", for example, "dicarboxylic acid unit" means "constitutional unit derived from dicarboxylic acid", and "diamine unit" means "constitutional unit derived from diamine".

In addition, in the description herein, unless otherwise specified, the description of "Y ppm by mass with respect to X" means that "Y $\mu$g is contained in 1 g of X". Here, a reference substance name or the like is input to X, and a specific numerical value is input to Y. For example, the description of "3 ppm by mass or more with respect to a total amount of the polyamide (A)" means "3 $\mu$g or more in 1 g of the polyamide (A)".

In addition, in the description herein, unless otherwise specified, the "discoloration" of the molded article more specifically refers to an "increase in b* value", and the b* value refers to a value confirmed by a method described in Examples described later.

[Polyamide Composition]

The polyamide composition which is one embodiment of the present invention is a polyamide composition containing a polyamide (A) (hereinafter sometimes simply referred to as "(A)") and a carbon fiber-containing filler (B) (hereinafter sometimes simply referred to as "(B)"), in which Fe content in the polyamide composition is 3 to 300 ppm by mass with respect to a total amount of the polyamide (A).

The Fe content in the polyamide composition is 3 ppm by mass or more with respect to the total amount of the polyamide (A), whereby discoloration of a molded article containing the polyamide composition in a high-temperature environment is suppressed. Iron easily causes an oxidation-reduction reaction and has a property of capturing oxygen. Therefore, it is presumed that when the Fe content in the polyamide composition is 3 ppm by mass, the reaction between oxygen and the polyamide can be suppressed even in the case of use in a high-temperature environment, and the discoloration of a molded article containing the polyamide composition in a high-temperature environment can be suppressed.

In addition, when the Fe content in the polyamide composition is 300 ppm by mass or less with respect to the total amount of the polyamide (A), for example, a decrease in mechanical properties such as an impact value and elongation is less likely to occur.

From the viewpoint described above, the Fe content in the polyamide composition is preferably 4 ppm by mass or more, more preferably 5 ppm by mass or more, still more preferably 6 ppm by mass or more, and yet still more preferably 8 ppm by mass or more with respect to the total amount of the polyamide (A). On the other hand, the Fe content in the polyamide composition is preferably 250 ppm by mass or less, more preferably 150 ppm by mass or less, still more preferably 100 ppm by mass or less, yet still more preferably 50 ppm by mass or less, and even yet still more preferably 30 ppm by mass or less with respect to the total amount of the polyamide (A).

As described above, these lower limit value and upper limit value described in stages can be each independently combined. For example, in one embodiment of the present invention, the Fe content in the polyamide composition is preferably 3 to 250 ppm by mass, more preferably 3 to 150 ppm by mass, still more preferably 3 to 100 ppm by mass, yet still more preferably 4 to 100 ppm by mass, even yet still more preferably 4 to 50 ppm by mass, even yet still more preferably 5 to 50 ppm by mass, even yet still more preferably 6 to 50 ppm by mass, even yet still more preferably 8 to 50 ppm by mass, and even yet still more preferably 8 to 30 ppm by mass with respect to the total amount of (A).

In the polyamide composition, the K content in the polyamide composition is preferably 3 ppm by mass or more, more preferably 4 ppm by mass or more, still more preferably 6 ppm by mass or more, and yet still more preferably 10 ppm by mass or more with respect to the total amount of the polyamide (A). This makes it easier to suppress discoloration of a molded article made of the polyamide composition in a high-temperature environment.

The upper limit value of the K content in the polyamide composition is not particularly limited as long as the effects of the present invention are exhibited. In one embodiment of the present invention, the K content in the polyamide composition is preferably 100 ppm by mass or less, more preferably 50 ppm by mass or less, still more preferably 20 ppm by mass or less, and yet still more preferably 15 ppm by mass or less with respect to the total amount of (A). This makes it possible to suppress the deterioration of the mechanical properties of the molded article.

In the polyamide composition, the Ni content in the polyamide composition is preferably 0.04 ppm by mass or more, more preferably 0.05 ppm by mass or more, and still more preferably 0.06 ppm by mass or more with respect to the total amount of the polyamide (A). This makes it easier to suppress discoloration of the molded article in a high-temperature environment.

The upper limit value of the Ni content in the polyamide composition is not particularly limited as long as the effects of the present invention are exhibited. In one embodiment of the present invention, the Ni content in the polyamide composition is preferably 1.0 ppm by mass or less, more preferably 0.5 ppm by mass or less, and still more preferably 0.3 ppm by mass or less with respect to the total amount of (A). This makes it possible to suppress the deterioration of the mechanical properties of the molded article.

In the polyamide composition, the Co content in the polyamide composition is preferably 0.01 ppm by mass or more, and more preferably 0.02 ppm by mass or more with respect to the total amount of the polyamide (A). This makes it easier to suppress discoloration of the molded article in a high-temperature environment.

The upper limit value of the Co content in the polyamide composition is not particularly limited as long as the effects of the present invention are exhibited. In one embodiment of the present invention, the Co content in the polyamide composition is preferably 0.5 ppm by mass or less, and more preferably 0.2 ppm by mass or less with respect to the total amount of (A). This makes it possible to suppress the deterioration of the mechanical properties of the molded article.

In the description herein, the "Fe content", "K content", "Ni content", and "Co content" respectively refer to the amount of each element confirmed by measuring an object (polyamide composition or carbon fiber-containing filler) by inductively coupled plasma mass spectrometry (hereinafter abbreviated as "ICP-MS").

That is, in a case where the above-described object contains each metal component (hereinafter, also referred to as "Fe component", "K component", "Ni component", and "Co component", respectively) detected as each element (Fe, K, Ni, and Co) when measured by ICP-MS, the amount of each element confirmed by the measurement by ICP-MS refers to the "Fe content", the "K content", the "Ni content", and the "Co content".

That is, whether the polyamide composition contains the above-described Fe component, K component, Ni component, and Co component can be confirmed by measuring the polyamide composition by ICP-MS. As a specific method of ICP-MS, a method described in Examples described later is used.

The Fe component, the K component, the Ni component, and the Co component contained in the polyamide composition are not particularly limited as long as they are components detected as an iron element (Fe), a potassium element (K), a nickel element (Ni), and a cobalt element (Co) when measured by ICP-MS. For example, in the case of an iron element (Fe), the element may be an iron atom (that is, zero valent iron) or an iron ion, or may be a compound containing at least one selected from iron atoms and iron ions, such as various alloys, oxides, hydroxides, chlorides, and complex compounds. The other elements are also the same, and may be each metal atom or ion, or may be a compound containing at least one selected from iron atoms and iron ions, such as various alloys, oxides, hydroxides, chlorides, and complex compounds.

Similarly, the K component, the Ni component, and the Co component are not particularly limited as long as they are each independently a component detected as a corresponding metal element (K, Ni, and Co) when measured by ICP-MS, that is, a component from which the K content, the Ni content, or the Co content is derived, and may be, for example, a single metal (metal atom) or a metal ion corresponding to each metal element, or may be a compound containing at least one selected from each metal atom and each metal ion corresponding to each metal element, such as various alloys, oxides, hydroxides, chlorides, and complex compounds.

Hereinafter, each component contained in the polyamide composition which is one embodiment of the present invention will be described.

<Polyamide (A)>

The polyamide (A) is preferably a polyamide containing a diamine unit (X) and a dicarboxylic acid unit (Y). In addition, as described later, the polyamide (A) is more preferably a polyamide containing a diamine unit (X) and a dicarboxylic acid unit (Y), in which the diamine unit (X) contains a diamine unit derived from an aliphatic diamine, and the dicarboxylic acid unit (Y) contains a dicarboxylic acid unit derived from at least one selected from the group consisting of an aliphatic dicarboxylic acid, an alicyclic dicarboxylic acid, and an aromatic dicarboxylic acid.

(Diamine unit (X))

The diamine unit (X) preferably contains a constitutional unit derived from at least one selected from the group consisting of an aliphatic diamine, an alicyclic diamine, and an aromatic diamine, and more preferably contains a constitutional unit derived from an aliphatic diamine.

Examples of the aliphatic diamine include one or more selected from a linear aliphatic diamine and a branched aliphatic diamine.

Examples of the linear aliphatic diamine include ethylenediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, and 1,18-octadecanediamine.

Examples of the branched aliphatic diamine include 1,2-propanediamine, 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2-methyl-1,3-propanediamine, 2-methyl-1,4-butanediamine, 2-ethyl-1,4-butanediamine, 2,3-dimethyl-1,4-butanediamine, 2-methyl-1,5-pentanediamine, 2-ethyl-1,5-pentanediamine, 2-propyl-1,5-pentanediamine, 3-methyl-1,5-pentanediamine, 2-butyl-2-ethyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,4-diethyl-1,6-hexanediamine, 2,2,4-trimethyl-1,6-hexanediamine, 2,4,4-trimethyl-1,6-hexanediamine, 2-ethyl-1,6-hexanediamine, 2-propyl-1,6-hexanediamine, 2-ethyl-1,7-heptanediamine, 2-propyl-1,7-heptanediamine, 2-methyl-1,8-octanediamine, 3-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 2-ethyl-1,8-octanediamine, 2-methyl-1,9-nonanediamine, and 5-methyl-1,9-nonanediamine.

Examples of the alicyclic diamine include cyclohexanediamine, methylcyclohexanediamine, norbornanedimethylamine, tricyclodecanedimethyldiamine, bis(4-amino-3-ethylcyclohexyl)methane, and bis(4-amino-3-ethyl-5-methylcyclohexyl)methane.

Examples of the aromatic diamine include p-phenylenediamine, m-phenylenediamine, p-xylylenediamine, m-xylylenediamine, 4,4'-diaminodiphenylmethane, 4,4'-diaminodiphenyl sulfone, 4,4'-diaminodiphenyl ether, and 4,4'-methylene-di-2,6-diethylaniline.

As the aliphatic diamine, an aliphatic diamine having 6 to 12 carbon atoms is preferable, an aliphatic diamine having 8 to 10 carbon atoms is more preferable, and an aliphatic diamine having 9 or 10 carbon atoms is still more preferable. According to this, the polymerization reaction of the diamine and the dicarboxylic acid easily proceeds favorably, and the physical properties of the polyamide to be obtained are more easily improved.

In one embodiment of the present invention, the diamine unit (X) preferably contains a constitutional unit derived from at least one selected from the group consisting of 1,6-hexanediamine, 1,9-nonanediamine, 1,10-decanediamine, 2-methyl-1,5-pentanediamine, and 2-methyl-1,8-octanediamine, more preferably contains a constitutional unit derived from at least one selected from the group consisting of 1,9-nonanediamine, 1,10-decanediamine, and 2-methyl-1,8-octanediamine, and still more preferably contains a constitutional unit derived from at least one selected from 1,9-nonanediamine and 1,10-decanediamine and a constitutional unit derived from 2-methyl-1,8-octanediamine, among the specific examples described above.

The diamine unit (X) may be a constitutional unit derived from only one kind of diamine or may be a constitutional unit derived from two or more kinds of diamine.

In one embodiment of the present invention, from the viewpoint of more easily exhibiting the effects of the present invention, the content of the constitutional unit derived from the aliphatic diamine in the diamine unit (X) is preferably 60 to 100 mol%, more preferably 70 to 100 mol%, and still more preferably 80 to 100 mol% in 100 mol% of the total amount of the constitutional unit contained in the diamine unit (X).

In one embodiment of the present invention, from the viewpoint of more easily exhibiting the effects of the present invention, the content of the constitutional unit derived from the aliphatic diamine having 9 or 10 carbon atoms in the diamine unit (X) is preferably 60 to 100 mol%, more preferably 70 to 100 mol%, and still more preferably 80 to 100 mol% in 100 mol% of the total amount of the constitutional unit contained in the diamine unit (X).

In one embodiment of the present invention, in a case where the diamine unit (X) contains a constitutional unit derived from at least one selected from 1,9-nonanediamine and 1,10-decanediamine and a constitutional unit derived from 2-methyl-1,8-octanediamine, the molar ratio of the total of at least one selected from 1,9-nonanediamine and 1,10-decanediamine to 2-methyl-1,8-octanediamine [(the total of at least one selected from 1,9-nonanediamine and 1,10-decanediamine)/(2-methyl-1,8-octanediamine)] is preferably in a range of 95/5 to 40/60, more preferably in a range of 90/10 to 45/55, and still more preferably in a range of 90/10 to 50/50.

(Dicarboxylic acid unit (Y))

The dicarboxylic acid unit (Y) can include an arbitrary dicarboxylic acid unit. The dicarboxylic acid unit (Y) preferably contains, for example, a constitutional unit derived from at least one selected from the group consisting of an aliphatic dicarboxylic acid, an aromatic dicarboxylic acid, and an alicyclic dicarboxylic acid. From the viewpoint of more easily exhibiting the effects of the present invention, the dicarboxylic acid unit (Y) more preferably contains a constitutional unit derived from at least one selected from the group consisting of an aromatic dicarboxylic acid and an alicyclic dicarboxylic acid, and still more preferably contains a dicarboxylic acid unit derived from an aromatic dicarboxylic acid.

Examples of the aliphatic dicarboxylic acid include oxalic acid, malonic acid, succinic acid, glutaric acid, adipic acid, pimelic acid, suberic acid, azelaic acid, sebacic acid, undecanedicarboxylic acid, dodecanedicarboxylic acid, dimethylmalonic acid, 2,2-diethylsuccinic acid, 2,2-dimethylglutaric acid, 2-methyladipic acid, and trimethyladipic acid.

Examples of the aromatic dicarboxylic acid include terephthalic acid, isophthalic acid, diphenic acid, 4,4'-biphenyldicarboxylic acid, diphenylmethane-4,4'-dicarboxylic acid, diphenylsulfone-4,4'-dicarboxylic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, 2,7-naphthalenedicarboxylic acid, 2,3-furandicarboxylic acid, 2,4-furandicarboxylic acid, 2,5-furandicarboxylic acid, and 3,4-furandicarboxylic acid.

Examples of the alicyclic dicarboxylic acid include 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, and cyclodecanedicarboxylic acid.

In one embodiment of the present invention, the dicarboxylic acid unit (Y) preferably contains a constitutional unit derived from at least one selected from the group consisting of terephthalic acid, cyclohexanedicarboxylic acid, and naphthalenedicarboxylic acid, more preferably contains a constitutional unit derived from at least one selected from the group consisting of terephthalic acid and naphthalenedicarboxylic acid, and still more preferably contains a constitutional unit derived from terephthalic acid, from the viewpoint of more easily exhibiting the effects of the present invention.

The dicarboxylic acid unit (Y) may be a constitutional unit derived from only one kind of the above-described dicarboxylic acid or may be a constitutional unit derived from two or more kinds of dicarboxylic acid.

In one embodiment of the present invention, from the viewpoint of more easily exhibiting the effects of the present invention, the content of the constitutional unit derived from the aromatic carboxylic acid in the dicarboxylic acid unit (Y) is preferably 60 to 100 mol%, more preferably 70 to 100 mol%, and still more preferably 80 to 100 mol% in 100 mol% of the total amount of the constitutional unit contained in the dicarboxylic acid unit (Y).

In one embodiment of the present invention, from the viewpoint of more easily exhibiting the effects of the present invention, the total content of the constitutional unit derived from at least one selected from the group consisting of terephthalic acid and naphthalenedicarboxylic acid in the dicarboxylic acid unit (Y) is preferably 60 to 100 mol%, more preferably 70 to 100 mol%, and still more preferably 80 to 100 mol% in 100 mol% of the total amount of the constitutional unit contained in the dicarboxylic acid unit (Y).

The molar ratio [(X)/(Y)] of the diamine unit (X) to the dicarboxylic acid unit (Y) in the polyamide (A) is preferably 45/55 to 55/45. When the molar ratio [(X)/(Y)] is in the above-described range, the polymerization reaction easily proceeds favorably, and a polyamide composition having excellent desired physical properties can easily be obtained.

The molar ratio of the diamine unit (X) to the dicarboxylic acid unit (Y) can be adjusted according to the blending ratio (molar ratio) of a raw material diamine and a raw material dicarboxylic acid.

The total proportion of the diamine unit (X) and the dicarboxylic acid (Y) unit in the polyamide (A) (the proportion of the total number of moles of the diamine unit (X) and the dicarboxylic acid unit (Y) based on the number of moles of all the constitutional units constituting the polyamide (A)) is preferably 70 mol% or more, more preferably 80 mol% or more, still more preferably 90 mol% or more, and yet still more preferably 95 mol% or more, or may also be 100 mol%. In addition, the total proportion of the diamine unit (X) and the dicarboxylic acid (Y) unit in the polyamide (A) may be 100 mol% or less, may be 99.5 mol% or less, and may be 99.0 mol% or less. Therefore, in one embodiment of the present invention, for example, the total proportion of the diamine unit (X) and the dicarboxylic acid unit (Y) in the polyamide (A) may be 70 to 100 mol%, may be 80 to 99.5 mol%, may be 90 to 99.5 mol%, or may be 95 to 99.0 mol%. When the total proportion of the diamine unit (X) and the dicarboxylic acid unit (Y) is within the above-described range, a polyamide composition having more excellent desired physical properties is easily obtained, which is preferable.

(Amino carboxylic acid unit)

The polyamide (A) may further contain an amino carboxylic acid unit in addition to the diamine unit (X) and the dicarboxylic acid unit (Y).

Examples of the aminocarboxylic acid unit include a constitutional unit derived from lactam such as caprolactam and lauryl lactam; an aminocarboxylic acid such as 11-aminoundecanoic acid and 12-aminododecanoic acid.

In one embodiment of the present invention, the content of the aminocarboxylic acid unit in the polyamide (A) is preferably 0 to 30 parts by mole, more preferably 0 to 20 parts by mole, still more preferably 0 to 10 parts by mole, and yet still more preferably 0 to 5 parts by mole, with respect to 100 parts by mole of the total of the diamine unit (X) and the dicarboxylic acid unit (Y) constituting the polyamide (A).

(Carboxylic acid unit having a valence of 3 or greater)

The polyamide (A) may also contain a constitutional unit derived from a carboxylic acid having a valence of 3 or greater, such as trimellitic acid, trimesic acid, and pyromellitic acid, in addition to the diamine unit (X) and the dicarboxylic acid unit (Y), within a range in which melt molding is possible, as long as the effects of the present invention are not impaired.

(Terminal blocking agent unit)

The polyamide (A) may contain a constitutional unit derived from a terminal blocking agent (hereinafter, also referred to as a "terminal blocking agent unit").

In a case where the polyamide (A) contains a terminal blocking agent unit, the content of the terminal blocking agent unit is preferably 1.0 to 10 parts by mole, and more preferably 2.0 to 5.0 parts by mole, with respect to 100 parts by mole of the diamine unit (X). When the content of the terminal blocking agent unit is within the above range, the polyamide (A) excellent in desired physical properties is easily obtained. The content of the terminal blocking agent unit can be made to fall within the above desired range by appropriately adjusting the amount of the terminal blocking agent at the time of charging raw materials for polymerization.

Examples of a method for obtaining the content of the terminal blocking agent unit in the polyamide (A) include, as described in JP 7-228690 A, a method in which solution viscosity is measured, the total amount of terminal groups is calculated from an expression representing the relationship between solution viscosity and number-average molecular weights, and the amounts of amino groups and carboxy groups determined by titration are subtracted therefrom, and a method in which $^1$H-NMR is used to obtain the content on the basis of integrated values of signals corresponding to the diamine unit and the terminal blocking agent unit, respectively. In the present invention, the latter method is preferable.

As the terminal blocking agent, a monofunctional compound having reactivity with a terminal amino group or a terminal carboxy group can be used. Specific examples thereof include monocarboxylic acids, acid anhydrides, monoisocyanates, monoacid halides, monoesters, monoalcohols, and monoamines. From the viewpoints of reactivity and stability of blocked terminals, a monocarboxylic acid is preferable as the terminal blocking agent for terminal amino groups, and a monoamine is preferable as the terminal blocking agent for terminal carboxy groups. From the viewpoint of ease of handling, a monocarboxylic acid is more preferable as the terminal blocking agent.

The monocarboxylic acid used as the terminal blocking agent is not particularly limited as long as it has reactivity with an amino group. Examples of the monocarboxylic acid include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids such as cyclopentanecarboxylic acid and cyclohexanecarboxylic acid; aromatic monocarboxylic acids such as benzoic acid, toluic acid, $\alpha$-naphthalenecarboxylic acid, $\beta$-naphthalenecarboxylic acid, methylnaphthalenecarboxylic acid, and phenylacetic acid; and an arbitrary mixture thereof. Among these, at least one selected from the group consisting of acetic acid, propionic acid, butyric acid, valeric acid, caproic acid, caprylic acid, lauric acid, tridecanoic acid, myristic acid, palmitic acid, stearic acid, and benzoic acid is preferable from the points of reactivity, stability of blocked terminals, and a price.

The monoamine used as the terminal blocking agent is not particularly limited as long as it has reactivity with a carboxy group. Examples of the monoamine include aliphatic monoamines such as methylamine, ethylamine, propylamine, butylamine, hexylamine, octylamine, decylamine, stearylamine, dimethylamine, diethylamine, dipropylamine, and dibutylamine; alicyclic monoamines such as cyclohexylamine and dicyclohexylamine; aromatic monoamines such as aniline, toluidine, diphenylamine, and naphthylamine; and an arbitrary mixture thereof. Among these, at least one selected from the group consisting of butylamine, hexylamine, octylamine, decylamine, stearylamine, cyclohexylamine, and aniline is preferable from the points of reactivity, a high boiling point, stability of blocked terminals, and a price.

In a case where the polyamide (A) contains a terminal blocking agent unit, the total proportion of the diamine unit (X), the dicarboxylic acid unit (Y), and the terminal blocking agent unit in the polyamide (A) (the proportion of the total number of moles of the diamine unit (X), the dicarboxylic acid unit (Y), and the terminal blocking agent unit based on the number of moles of all the constitutional units constituting the polyamide (A)) is preferably 70.5 to 100 mol%, more preferably 80 to 100 mol%, still more preferably 90 to 100 mol%, and yet still more preferably 95 to 100 mol%.

The content of the polyamide (A) in the polyamide composition is preferably 50 to 99% by mass, more preferably 60 to 95% by mass, and still more preferably 65 to 90% by mass with respect to the total content (100% by mass) of the polyamide (A) and the carbon fiber-containing filler (B), from the viewpoint of easily securing moldability.

In one embodiment of the present invention, the content of the polyamide (A) in the polyamide composition is preferably 40 to 99% by mass, more preferably 48 to 95% by mass, and still more preferably 52 to 90% by mass with respect to the total amount (100% by mass) of the polyamide composition, from the viewpoint of easily ensuring good hot water resistance and moldability.

(Physical properties of polyamide (A))

The melting point of the polyamide (A) is preferably 250°C or higher, more preferably 280°C or higher, and still more preferably 300°C or higher. When the melting point is within the above range, a polyamide composition having further excellent heat resistance can be obtained. The upper limit value of the melting point of the polyamide (A) is not particularly limited, and is preferably 330°C or lower, and more preferably 320°C or lower in consideration of moldability and the like. As described above, these lower limit value and upper limit value described in stages can be each independently combined.

For example, in one embodiment of the present invention, the melting point of the polyamide (A) is preferably 250 to 330°C, more preferably 280 to 320°C, and still more preferably 300 to 320°C.

More specifically, the melting point of the polyamide (A) can be obtained by the method described in Examples.

The inherent viscosity of the polyamide (A) is preferably 0.5 dl/g or more, and more preferably 0.7 dl/g or more. On the other hand, the inherent viscosity of the polyamide (A) is preferably 2.0 dl/g or less, and more preferably 1.5 dl/g or less. As described above, these lower limit value and upper limit value described in stages can be each independently combined. For example, in one embodiment of the present invention, the inherent viscosity of the polyamide (A) is preferably 0.5 to 2.0 dl/g, and more preferably 0.7 to 1.5 dl/g. When the inherent viscosity is within the above range, a polyamide (A) having more excellent desired physical properties is easily obtained.

The inherent viscosity of the polyamide (A) can be obtained by measuring the time of flow of a solution thereof using, as a solvent, concentrated sulfuric acid at a concentration of 0.2 g/dl and a temperature of 30°C. More specifically, the inherent viscosity of the polyamide (A) can be obtained by the method described in Examples.

The terminal amino group amount ($[NH_2]$) of the polyamide (A) is preferably 5 $\mu$mol/g or more, more preferably 8 $\mu$mol/g or more, and still more preferably 10 $\mu$mol/g or more. On the other hand, from the viewpoint of more easily suppressing discoloration in a high-temperature environment, it is preferably 100 $\mu$mol/g or less, more preferably 80 $\mu$mol/g or less, still more preferably 70 $\mu$mol/g or less, yet still more preferably 50 $\mu$mol/g or less, even yet still more preferably 25 $\mu$mol/g or less, and even yet still more preferably 15 $\mu$mol/g or less. As described above, these lower limit value and upper limit value described in stages can be each independently combined. For example, in one embodiment of the present invention, the terminal amino group amount ($[NH_2]$) of the polyamide (A) is preferably 5 to 100 $\mu$mol/g, more preferably 8 to 80 $\mu$mol/g, still more preferably 10 to 70 $\mu$mol/g, yet still more preferably 10 to 50 $\mu$mol/g, even yet still more preferably 10 to 25 $\mu$mol/g, and even yet still more preferably 10 to 15 $\mu$mol/g.

In the description herein, the "terminal amino group amount" refers to the amount (unit: $\mu$mol) of terminal amino groups contained in 1 g of the polyamide (A). The terminal amino group amount can be obtained by a neutralization titration method using an indicator, and more specifically, can be obtained by the method described in Examples.

The terminal carboxy group amount ($[COOH]$) of the polyamide (A) is preferably 5 to 100 $\mu$mol/g, more preferably 8 to 80 $\mu$mol/g, and still more preferably 10 to 70 $\mu$mol/g.

In the description herein, the "terminal carboxy group amount" refers to the amount (unit: $\mu$mol) of terminal carboxy groups contained in 1 g of the polyamide (A). The terminal carboxy group amount can be obtained by a neutralization titration method using an indicator.

(Production of polyamide (A))

The polyamide (A) can be produced by using any method known as a method for producing a polyamide. For example, the polyamide (A) can be produced by a melt polymerization method, a solid phase polymerization method, or a melt extrusion polymerization method using a dicarboxylic acid and a diamine as raw materials. Among these, a solid phase polymerization method is preferable from the viewpoint that thermal deterioration during polymerization can be more favorably suppressed.

The polyamide (A) is produced, for example, by firstly adding a diamine, a dicarboxylic acid, and optionally a catalyst and a terminal blocking agent all at once to produce a nylon salt. At this time, the terminal amino group amount and the terminal carboxy group amount are made easier to control by adjusting the number of moles of all carboxy groups and the number of moles of all amino groups contained in the reaction raw materials.

After production of the nylon salt, the nylon salt is heated and polymerized at a temperature of 200 to 250°C to form a prepolymer, and the prepolymer is further subjected to solid phase polymerization or polymerization using a melt extruder. When the final stage of the polymerization is carried out by solid phase polymerization, the polymerization is preferably carried out under reduced pressure or in an inert gas flow, and when the polymerization temperature is within the range of 200 to 280°C, the polymerization rate is high, the productivity is excellent, and coloring and gelling can be effectively suppressed. When the final stage of the polymerization is carried out using a melt extruder, the polymerization temperature is preferably 370°C or lower, and when the polymerization is carried out under such conditions, there is almost no decomposition, and the polyamide (A) with little deterioration is obtained.

Examples of the catalyst that can be used in producing the polyamide (A) include phosphoric acid, phosphorus acid, hypophosphorous acid, and salts and esters thereof. Examples of the salts and esters include a salt of phosphoric acid, phosphorus acid, or hypophosphorous acid with a metal such as potassium, sodium, magnesium, vanadium, calcium, zinc, cobalt, manganese, tin, tungsten, germanium, titanium, or antimony; an ammonium salt of phosphoric acid, phosphorus acid, or hypophosphorous acid; and an ethyl ester, an isopropyl ester, a butyl ester, a hexyl ester, an isodecyl ester, an octadecyl ester, a decyl ester, a stearyl ester, and a phenyl ester of phosphoric acid, phosphorus acid, or hypophosphorous acid.

The amount of the catalyst is preferably 0.01% by mass or more, more preferably 0.03% by mass or more, and still more preferably 0.05% by mass or more, and is preferably 1.0% by mass or less, more preferably 0.8% by mass or less, and still more preferably 0.5% by mass or less, with respect to 100% by mass of the total mass of the raw materials. As a result, the polymerization proceeds well, and impurities derived from the catalyst are less likely to be generated. As described above, these lower limit value and upper limit value described in stages can be each independently combined. For example, in one embodiment of the present invention, the amount of the catalyst is preferably 0.01 to 1.0% by mass, more preferably 0.03 to 0.8% by mass, and still more preferably 0.05 to 0.5% by mass with respect to 100% by mass of the total mass of the raw materials.

<Carbon Fiber-Containing Filler (B)>

The carbon fiber-containing filler (B) contains at least carbon fibers. The carbon fiber-containing filler (B) may be composed of only carbon fibers. Alternatively, the carbon fiber-containing filler (B) may contain carbon fibers and other component.

The carbon fiber is not particularly limited, and examples thereof include a polyacrylonitrile (PAN)-based carbon fiber and a pitch-based carbon fiber.

The carbon fiber-containing filler (B) preferably contains, as other component, a metal component. The metal component is preferably at least one selected from the group consisting of an Fe component, a K component, a Ni component, and a Co component. This makes it possible to easily suppress discoloration of the molded article containing the polyamide composition in a high-temperature environment. By including a plurality of metal components among the above-described metal components, discoloration of the molded article containing the polyamide composition in a high-temperature environment can be more easily suppressed.

The carbon fiber-containing filler (B) preferably contains an Fe component. In this case, it is preferable that at least a part of the Fe content in the polyamide composition is derived from the Fe component contained in the carbon fiber-containing filler (B). That is, it is preferable that the carbon fiber-containing filler (B) contains an Fe component, and the Fe component is at least a part or all of the Fe content in the polyamide composition. For example, based on the total amount (100% by mass) of the Fe content in the polyamide composition, the amount derived from the Fe component contained in the carbon fiber-containing filler (B) is preferably 50 to 100% by mass, more preferably 75 to 100% by mass, and still more preferably 90 to 100% by mass.

It is considered that when the carbon fiber-containing filler (B) contains an Fe component, aggregation of the Fe component in the polyamide composition is more easily suppressed than when the Fe component is mixed alone with the polyamide (A). As a result, it is assumed that the dispersibility of the Fe component in the obtained polyamide composition is improved, the amount of the Fe component dispersed and present on the surface of the molded article containing the polyamide composition is increased, and discoloration of the molded article in a high-temperature environment is more easily suppressed.

The Fe content in the carbon fiber-containing filler (B) is preferably 5 ppm by mass or more, more preferably 7 ppm by mass or more, still more preferably 10 ppm by mass or more, yet still more preferably 12 ppm by mass or more, even yet still more preferably 14 ppm by mass or more, and even yet still more preferably 20 ppm by mass or more, with respect to the total amount of (B), from the viewpoint of more easily suppressing discoloration of a molded article containing the polyamide composition in a high-temperature environment.

In addition, the upper limit value of the Fe content in (B) is not particularly limited as long as the upper limit value does not exceed the Fe content in the above-described polyamide composition after (B) is blended with (A) and the effects of the present invention are exhibited. However, in one embodiment of the present invention, from the viewpoint of making it difficult for the mechanical properties of a molded article containing the polyamide composition to deteriorate, the Fe content in (B) is preferably 700 ppm by mass or less, more preferably 600 ppm by mass or less, still more preferably 350 ppm by mass or less, yet still more preferably 250 ppm by mass or less, even yet still more preferably 120 ppm by mass or less, and even yet still more preferably 70 ppm by mass or less with respect to the total amount of (B).

As described above, these lower limit value and upper limit value described in stages can be each independently combined. For example, in one embodiment of the present invention, the Fe content in the carbon fiber-containing filler (B) is preferably 5 to 700 ppm by mass, more preferably 7 to 600 ppm by mass, still more preferably 10 to 350 ppm by mass, yet still more preferably 12 to 250 ppm by mass, even yet still more preferably 14 to 120 ppm by mass, and even yet still more preferably 20 to 70 ppm by mass with respect to the total amount of (B).

The carbon fiber-containing filler (B) preferably contains a K component. The K content in the carbon fiber-containing filler (B) is preferably 5 ppm by mass or more, more preferably 7 ppm by mass or more, still more preferably 10 ppm by mass or more, yet still more preferably 15 ppm by mass or more, and even yet still more preferably 23 ppm by mass or more, with respect to the total amount of (B), from the viewpoint of more easily suppressing discoloration of a molded article containing the polyamide composition in a high-temperature environment.

The upper limit value of the K content in (B) is not particularly limited as long as the effects of the present invention are exhibited. However, in one embodiment of the present invention, from the viewpoint of making it difficult for the mechanical properties of a molded article containing the polyamide composition to deteriorate, the K content in (B) is preferably 250 ppm by mass or less, more preferably 150 ppm by mass or less, still more preferably 50 ppm by mass or less, and yet still more preferably 40 ppm by mass or less with respect to the total amount of (B).

As described above, these lower limit value and upper limit value described in stages can be each independently combined. For example, in one embodiment of the present invention, the K content in the carbon fiber-containing filler (B) is preferably 5 to 250 ppm by mass, more preferably 7 to 150 ppm by mass, still more preferably 10 to 50 ppm by mass, yet still more preferably 15 to 40 ppm by mass, and even yet still more preferably 23 to 40 ppm by mass with respect to the total amount of (B).

The carbon fiber-containing filler (B) preferably contains a Ni component. The Ni content in the carbon fiber-containing filler (B) is preferably 0.09 ppm by mass or more, more preferably 0.12 ppm by mass or more, and still more preferably 0.14 ppm by mass or more, with respect to the total amount of (B), from the viewpoint of more easily suppressing discoloration of a molded article formed from the polyamide composition in a high-temperature environment.

The upper limit value of the Ni content in (B) is not particularly limited as long as the effects of the present invention are exhibited. However, in one embodiment of the present invention, the Ni content in (B) is preferably 5 ppm by mass or less, more preferably 3 ppm by mass or less, and still more preferably 1 ppm by mass or less, with respect to the total amount of (B), from the viewpoint of making it difficult for the mechanical properties of a molded article formed from the polyamide composition to deteriorate.

As described above, these lower limit value and upper limit value described in stages can be each independently combined. For example, in one embodiment of the present invention, the Ni content in the carbon fiber-containing filler (B) is preferably 0.09 to 5 ppm by mass, more preferably 0.12 to 3 ppm by mass, and still more preferably 0.14 to 1 ppm by mass with respect to the total amount of (B).

The carbon fiber-containing filler (B) preferably contains a Co component. The Co content in the carbon fiber-containing filler (B) is preferably 0.02 ppm by mass or more, and more preferably 0.05 ppm by mass or more, with respect to the total amount of (B), from the viewpoint of more easily suppressing discoloration of a molded article formed from the polyamide composition in a high-temperature environment.

The upper limit value of the Co content in (B) is not particularly limited as long as the effects of the present invention are exhibited. In one embodiment of the present invention, the Co content in (B) is preferably 3 ppm by mass or less, and more preferably 1 ppm by mass or less, with respect to the total amount of (B), from the viewpoint of making it difficult for the mechanical properties of a molded article formed from the polyamide composition to deteriorate.

As described above, these lower limit value and upper limit value described in stages can be each independently combined. For example, in one embodiment of the present invention, the Co content in the carbon fiber-containing filler (B) is preferably 0.02 to 3 ppm by mass, and more preferably 0.05 to 1 ppm by mass with respect to the total amount of (B).

Whether the carbon fiber-containing filler (B) contains the Fe component, the K component, the Ni component, and the Co component can be confirmed by measuring the carbon fiber-containing filler (B) by ICP-MS.

The Fe component, the K component, the Ni component, and the Co component contained in the carbon fiber-containing filler (B) are not particularly limited as long as they are components detected as an iron element (Fe), a potassium element (K), a nickel element (Ni), and a cobalt element (Co) when measured by ICP-MS. For example, the element may be an iron atom (that is, zero valent iron) or an iron ion, or may be a compound containing at least one selected from iron atoms and iron ions, such as various alloys, oxides, hydroxides, chlorides, and complex compounds.

As described above, in the description herein, when the carbon fiber-containing filler (B) contains the Fe component, the K component, the Ni component, and the Co component described above, the content of each component in the carbon fiber-containing filler (B) refers to the amount of each element measured by ICP-MS of the carbon fiber-containing filler (B). Specifically, it refers to the amount measured by the method described in Examples described later.

The carbon fiber-containing filler (B) is preferably fibrous. Thus, the strength of the polyamide composition can be increased.

(Fiber length of carbon fiber-containing filler (B))

The fiber length of the carbon fiber-containing filler (B) before mixing with the polyamide (A) is preferably 0.1 to 20 mm, more preferably 0.5 to 15 mm, and still more preferably 1 to 10 mm.

Further, the carbon fiber-containing filler (B) may be cut by a shearing force or the like at the time of mixing with the polyamide (A). In this case, the carbon fiber-containing filler (B) after mixing with the polyamide (A), that is, the carbon fiber-containing filler (B) contained in the polyamide composition has a fiber length of preferably 0.1 to 20 mm, more preferably 0.1 to 10 mm, still more preferably 0.1 to 5 mm, yet still more preferably 0.1 to 1 mm, and even yet still more preferably 0.1 to 0.5 mm.

In the description herein, unless otherwise specified, when simply referred to as "the fiber length of the carbon fiber-containing filler (B)", it refers to "the fiber length of the carbon fiber-containing filler (B) after mixing with the polyamide (A)", that is, the fiber length of the carbon fiber-containing filler (B) in the polyamide composition.

(Fiber diameter of carbon fiber-containing filler (B))

The fiber diameter of the carbon fiber-containing filler (B) before mixing with the polyamide (A) is not particularly limited as long as the effects of the present invention are exhibited, and is preferably 1 to 50 μm, more preferably 2 to 30 μm, and still more preferably 3 to 20 μm from the viewpoint of mechanical properties.

The fiber diameter of the carbon fiber-containing filler (B) after mixing with the polyamide is not particularly limited as long as the effects of the present invention are exhibited, and is preferably 1 to 50 μm, more preferably 2 to 30 μm, and still more preferably 3 to 20 μm from the viewpoint of mechanical properties.

In the description herein, unless otherwise specified, when simply referred to as "the fiber diameter of the carbon fiber-containing filler (B)", it refers to "the fiber diameter of the carbon fiber-containing filler (B) after mixing with the polyamide (A)", that is, the fiber diameter of the carbon fiber-containing filler (B) in the polyamide composition.

(Fiber length of carbon fiber contained in carbon fiber-containing filler (B))

The fiber length of the carbon fiber contained in the carbon fiber-containing filler (B) before mixing with the polyamide (A) is not particularly limited as long as the effects of the present invention are exhibited, and is preferably 0.1 to 20 mm, more preferably 0.5 to 15 mm, and still more preferably 1 to 10 mm from the viewpoint of processability during melt-kneading with the resin. Further, the carbon fiber may be cut by a shearing force or the like at the time of mixing with the polyamide (A). In this case, the fiber length of the carbon fiber after mixing with the polyamide (A), that is, the fiber length of the carbon fiber contained in the polyamide composition is preferably 0.1 to 20 mm, more preferably 0.1 to 10 mm, still more preferably 0.1 to 5 mm, yet still more preferably 0.1 to 1 mm, and even yet still more preferably 0.1 to 0.5 mm.

In the description herein, unless otherwise specified, when simply referred to as "the fiber length of the carbon fiber", it refers to "the fiber length of the carbon fiber after mixing with the polyamide (A)", that is, the fiber length of the carbon fiber in the polyamide composition.

(Fiber diameter of carbon fiber contained in carbon fiber-containing filler (B))

The fiber diameter of the carbon fiber contained in the carbon fiber-containing filler (B) before mixing with the polyamide (A) is not particularly limited as long as the effects of the present invention are exhibited, and is preferably 1 to 50 μm, more preferably 2 to 30 μm, and still more preferably 3 to 20 μm from the viewpoint of mechanical properties. The fiber diameter of the carbon fiber after mixing with the polyamide is not particularly limited as long as the effects of the present invention are exhibited, and is preferably 1 to 50 μm, more preferably 2 to 30 μm, and still more preferably 3 to 20 μm from the viewpoint of mechanical properties.

In the description herein, unless otherwise specified, when simply referred to as "the fiber diameter of the carbon fiber", it refers to "the fiber diameter of the carbon fiber after mixing with the polyamide (A)", that is, the fiber diameter of the carbon fiber in the polyamide composition.

(Method for measuring fiber length and fiber diameter of carbon fiber-containing filler (B) and carbon fiber)

The fiber length and the fiber diameter of the carbon fiber-containing filler (B) and the carbon fiber before mixing with the polyamide (A) can be calculated by the following method.

The fiber length of the carbon fiber-containing filler (B) and the carbon fiber before mixing with the polyamide (A) can be measured, for example, in the case of the carbon fiber-containing filler (B), by sandwiching both ends of the carbon fiber-containing filler (B) in the longitudinal direction with a vernier caliper and reading the displayed value. The same applies to the carbon fiber.

The fiber diameter of the carbon fiber-containing filler (B) and the carbon fiber before mixing with the polyamide (A) can be calculated by the following method, for example, in the case of the carbon fiber-containing filler (B). First, the carbon fiber-containing filler (B) is placed on an observation table in a direction in which the cross-section of the fiber can be observed, and observed with an optical microscope to obtain an image. In the obtained image, the diameter of the cross-section close to a true circle is subjected to image processing, whereby the fiber diameter can be measured. The same applies to the carbon fiber.

The fiber length and the fiber diameter of the carbon fiber-containing filler (B) and the carbon fiber after mixing with the polyamide (A) can be calculated by the following method.

The fiber length of the carbon fiber-containing filler (B) and the carbon fiber after mixing with the polyamide (A) can be calculated by the following method. First, the polyamide (A) contained in the polyamide composition is removed by heat treatment. The fibers remaining after the heat treatment are dispersed on an observation table to such an extent that each of the carbon fibers can be confirmed, and the dispersion is observed using an optical microscope to obtain an image. The lengths of 1,000 fibers randomly selected in the obtained image are measured by image processing, and the fiber length can be calculated from the following equation.

$$\bullet \text{Fiber length} = \text{(total value of measured fiber lengths)}/\text{(number of measured fibers)}$$

The fiber diameter of the carbon fiber-containing filler (B) and the carbon fiber after mixing with the polyamide (A) can be calculated by the following method. First, a multi-purpose test piece type A1 (dumbbell-shaped test piece described in JIS K7139; thickness: 4 mm, whole length: 170 mm, length of parallel section: 80 mm, width of parallel section: 10 mm) obtained by injection molding a polyamide composition is cut in a direction perpendicular to the flow direction of the resin during injection molding (longitudinal direction of the fiber), and the cross section is observed using a microscope to obtain an image. In the obtained image, the diameter of the cross-section close to a true circle is subjected to image processing, whereby the fiber diameter can be measured.

The content of the carbon fibers contained in the carbon fiber-containing filler (B) is preferably 75 to 100% by mass, more preferably 80 to 100% by mass, still more preferably 80 to 98% by mass, and yet still more preferably 80 to 95% by mass based on the total amount (100% by mass) of the carbon fiber-containing filler (B). As a result, the processability during melt-kneading with the resin is improved, and the mechanical properties of the molded article containing the polyamide composition are likely to be excellent.

The carbon fiber-containing filler (B) preferably further contains at least one selected from the group consisting of a thermosetting resin, a modified product of a thermosetting resin, a thermoplastic resin, and a modified product of a thermoplastic resin (hereinafter, also referred to as a "resin component").

The thermosetting resin is not particularly limited, and examples thereof include a thermosetting resin used as a matrix resin of the above-described carbon fiber reinforced plastic. Examples of the thermosetting resin include an epoxy resin, a phenol resin, a melamine resin, a urea resin, an unsaturated polyester resin, a thermosetting silicone resin, a thermosetting urethane resin, and a thermosetting polyimide.

In addition, examples of the modified product of the thermosetting resin include a product in which a part or all of the thermosetting resin used as the matrix resin of the above-described carbon fiber reinforced plastic is modified by decomposition, oxidation, carbonization, or the like by a removal treatment such as the above-described incineration treatment.

The thermoplastic resin is not particularly limited, and examples thereof include a thermoplastic resin used as a matrix resin of the above-described carbon fiber reinforced plastic. Examples of the thermoplastic resin include polyolefins such as polyethylene and polypropylene; polyester resins such as polyethylene terephthalate and polybutylene terephthalate; polystyrene; polycarbonate; polyacetal; polyamide; polyimide; polyetheretherketone; polyethersulfone; polyphenylene sulfide; thermoplastic polyurethane; thermoplastic silicone resin such as polydimethylsiloxane; fluororesin; and liquid crystal resin.

In addition, examples of the modified product of the thermoplastic resin include a product in which a part or all of the thermoplastic resin used as the matrix resin of the above-described carbon fiber reinforced plastic is modified by decomposition, oxidation, carbonization, or the like by a removal treatment such as the above-described incineration treatment.

In a case where the carbon fiber-containing filler (B) further contains at least one selected from the group consisting of a thermosetting resin, a modified product of a thermosetting resin, a thermoplastic resin, and a modified product of a thermoplastic resin, the total content of the at least one selected from the group consisting of a thermosetting resin, a modified product of a thermosetting resin, a thermoplastic resin, and a modified product of a thermoplastic resin is preferably 0.5 to 25% by mass, more preferably 1 to 20% by mass, still more preferably 2 to 20% by mass, yet still more preferably 3 to 20% by mass, and even yet still more preferably 5 to 20% by mass based on the total amount (100% by mass) of the carbon fiber-containing filler (B), from the viewpoint of processability during melt-kneading the (A) and (B) and mechanical properties.

However, in the description herein, in a case where the thermoplastic resin contained in the carbon fiber-containing filler (B) is a polyamide, the polyamide is regarded as the polyamide (A). Therefore, the content of the polyamide (A) in the polyamide composition in this case is a value obtained by adding up the content of the polyamide (A) contained in the carbon fiber-containing filler (B).

When the carbon fiber-containing filler (B) contains a resin component, the resin component is preferably present on the surface of the carbon fiber.

In addition, the carbon fiber-containing filler (B) preferably contains a sizing agent.

As the sizing agent, any sizing agent for carbon fibers can be used. Examples of the sizing agent include a polyester-based sizing agent, an epoxy-based sizing agent, a phenol-based sizing agent, a melamine-based sizing agent, a polyimide-based sizing agent, a polyamide-based sizing agent, a maleic anhydride-based sizing agent, a polyether-based sizing agent, a polyurethane-based sizing agent, an acrylic-based sizing agent, and a terpene-based sizing agent. These sizing agents may be used alone or in combination of two or more kinds thereof.

In a case where the carbon fiber-containing filler (B) further contains a sizing agent, the content of the sizing agent is not particularly limited as long as the effects of the present invention are exhibited, and is preferably 0.1 to 5% by mass, more preferably 0.5 to 4% by mass, and still more preferably 1 to 3% by mass based on the total amount (100% by mass) of (B) from the viewpoint of processability during melt-kneading with the resin and mechanical properties.

However, in the description herein, in a case where the sizing agent is a polyamide-based sizing agent, the polyamide-based sizing agent is regarded as the polyamide (A). Therefore, the content of the polyamide (A) in the polyamide composition in this case is a value obtained by adding up the content of the polyamide-based sizing agent.

In one embodiment of the present invention, the total content of the carbon fiber, the sizing agent, and the resin component in the carbon fiber-containing filler (B) is preferably 80 to 100% by mass, more preferably 85 to 100% by mass, still more preferably 90 to 100% by mass, and yet still more preferably 95 to 100% by mass based on the total amount (100% by mass) of (B).

However, when the carbon fiber-containing filler (B) contains one or more selected from the group consisting of an Fe component, a K component, a Ni component, and a Co component, the total content also includes the total content of these metal components. That is, in this case, the total content of the Fe component, the K component, the Ni component, the Co component, the carbon fiber, the sizing agent, and the resin component in the carbon fiber-containing filler (B) is preferably 80 to 100% by mass, more preferably 85 to 100% by mass, still more preferably 90 to 100% by mass, and yet still more preferably 95 to 100% by mass based on the total amount (100% by mass) of (B).

The content of the carbon fiber-containing filler (B) in the polyamide composition can be appropriately adjusted in accordance with the application of the polyamide composition to be obtained. For example, in one embodiment of the present invention, the content of the carbon fiber-containing filler (B) is preferably 1 to 50% by mass, more preferably 5 to 40% by mass, and still more preferably 10 to 35% by mass with respect to the total content (100% by mass) of the polyamide (A) and the carbon fiber-containing filler (B).

In one embodiment of the present invention, the content of the carbon fiber-containing filler (B) in the polyamide composition is preferably 0.8 to 50% by mass, more preferably 4 to 40% by mass, and still more preferably 8 to 35% by mass with respect to the total amount (100% by mass) of the polyamide composition.

In one embodiment of the present invention, the total content of the polyamide (A) and the carbon fiber-containing filler (B) in the polyamide composition is preferably 80 to 100% by mass, more preferably 85 to 100% by mass, still more preferably 90 to 100% by mass, and yet still more preferably 95 to 100% by mass with respect to the total amount (100% by mass) of the polyamide composition.

However, in one embodiment of the present invention, when the polyamide composition contains the Fe component as an additional component described later in addition to the iron component contained in the carbon fiber-containing filler (B), the total content of the Fe component in the polyamide (A), the carbon fiber-containing filler (B), and the additional component in the polyamide composition is preferably 80 to 100% by mass, more preferably 85 to 100% by mass, still more preferably 90 to 100% by mass, and yet still more preferably 95 to 100% by mass with respect to the total amount (100% by mass) of the polyamide composition.

In one embodiment of the present invention, the content of the carbon fiber derived from the carbon fiber-containing filler (B) in the polyamide composition is preferably 0.6 to 50% by mass, more preferably 3 to 40% by mass, and still more preferably 6 to 35% by mass based on the total amount (100% by mass) of the polyamide composition.

In one embodiment of the present invention, the total content of the carbon fiber derived from the carbon fiber-containing filler (B) and the polyamide (A) in the polyamide composition is preferably 70 to 100% by mass, more preferably 75 to 100% by mass, still more preferably 80 to 100% by mass, yet still more preferably 85 to 99% by mass, and even yet still more preferably 85 to 95% by mass based on the total amount (100% by mass) of the polyamide composition.

The carbon fiber-containing filler (B) is preferably a recycled carbon fiber. The recycled carbon fiber is not a new (virgin) carbon fiber, but is a carbon fiber used once, that is, a recycled product of the carbon fiber. Thus, recycled carbon fiber means carbon fiber recovered from an article containing carbon fiber.

Examples of the recycled carbon fiber include those obtained by subjecting a composite material containing a carbon fiber such as a carbon fiber reinforced plastic and a matrix resin to a heat treatment, an incineration treatment, a chemical treatment, or the like to remove a certain amount of a resin component such as a thermosetting resin or a thermoplastic resin, which is the matrix resin of the carbon fiber reinforced plastic, and separating and recovering the carbon fiber. In addition, the recycled carbon fibers may be subjected to a treatment other than the treatment for removing the matrix resin, such as a cutting treatment, a crushing treatment, or a classification treatment, in the recycling process.

In a case where the carbon fiber-containing filler (B) is a recycled carbon fiber, the carbon fiber-containing filler (B) is likely to contain an Fe component in the process of performing a recycling treatment of the carbon fiber from an article containing the carbon fiber, which is also preferable from the viewpoint that the suitable range of the Fe content in (B) described above is likely to be satisfied. In addition, for the same reason, in a case where the carbon fiber-containing filler (B) is a recycled carbon fiber, it is also preferable from the viewpoint that one or more selected from the group consisting of the suitable range of the K content, the suitable range of the Ni content, and the suitable range of the Co content in (B) described above are likely to be satisfied. When the carbon fiber-containing filler (B) is a recycled carbon fiber, it is preferable from the viewpoint of reducing environmental load.

<Other Components>

The polyamide composition may contain components other than the polyamide (A) and the carbon fiber-containing filler (B) described above (hereinafter, also referred to as "other components") as necessary as long as the objects and effects of the present invention are not impaired.

Examples of the other components include various additives such as an antioxidant, a colorant, an ultraviolet absorber, a photostabilizing agent, an antistatic agent, a flame retardant, a flame-retardant aid, a crystal nucleating agent, a plasticizer, a lubricant, a smoothing agent, a dispersant, an oxygen absorber, a hydrogen sulfide adsorbent, a crystallization retardant, and an impact modifier (for example, elastomer).

These various additives may be used alone or in combination of two or more kinds thereof.

In one embodiment of the present invention, the polyamide composition may contain a metal component as the other component. For example, one or more selected from the group consisting of an Fe component, a K component, a Ni component, and a Co component may be contained. For example, among the various additives, a component detected as an iron element (Fe) when measured by ICP-MS is included in the Fe component. In addition, as described above, there is no particular limitation as long as the component is detected as an iron element (Fe) when measured by ICP-MS, and the component may be blended as metal iron (that is, elemental iron) such as iron powder in addition to the above-described additives.

In a case where the polyamide composition contains an Fe component as the other component, the total content of the Fe component included as the other component is not particularly limited as long as the Fe content in the above-described polyamide composition is satisfied.

In a case where the polyamide composition contains other components, the total content of the other components is not particularly limited as long as the effects of the present invention are not impaired, and is preferably 0.02 to 50 parts by mass, more preferably 0.04 to 25 parts by mass, still more preferably 0.06 to 20 parts by mass, yet still more preferably 0.08 to 10 parts by mass, and even yet still more preferably 0.1 to 5 parts by mass, with respect to 100 parts by mass of the total of (A) and (B).

[Method for Producing Polyamide Composition]

A method for producing a polyamide composition, which is one embodiment of the present invention, is a method for obtaining a polyamide composition by mixing a polyamide (A) and a carbon fiber-containing filler (B), in which Fe content in the polyamide composition is 3 to 300 ppm by mass with respect to a total amount of the polyamide (A).

As a method of mixing the polyamide (A) and the carbon fiber-containing filler (B), for example, a method of melt-kneading using a single-screw extruder, a twin-screw extruder, a kneader, a Banbury mixer, or the like is preferably adopted. Conditions for melt-kneading are not particularly limited, and a method in which melt-kneading is conducted for 1 to 30 minutes at a temperature within the range of about 10 to 50°C higher than the melting point of the polyamide (A) is exemplified.

When the polyamide composition further contains a component other than the polyamide (A) and the carbon fiber-containing filler (B), the order of mixing the polyamide (A), the carbon fiber-containing filler (B), and the other component is not limited as long as the polyamide composition can be obtained, and a known method can be used. Examples of the method include a method of mixing the respective components sequentially or simultaneously, a method of adding the other component during polymerization of the polyamide (A), and a method of dry-blending the other component with the polyamide (A) and melt-kneading the mixture. Preferably, a method of mixing the carbon fiber-containing filler (B) with a mixture in which the polyamide (A) and the other component are previously mixed can be adopted.

The "polyamide composition" obtained by the production method is the same as the "[Polyamide Composition]" described above in the section of the polyamide composition which is one embodiment of the present invention, and the preferred embodiment thereof is also the same.

The "polyamide (A)" and the "carbon fiber-containing filler (B)" in the production method are respectively the same as the "<Polyamide (A)>" and the "<Carbon Fiber-Containing Filler (B)>" described above in the section of the polyamide composition which is one embodiment of the present invention, and the preferred embodiments thereof are also the same.

In addition, in the production method, the blending amount when mixing the "polyamide (A)" and the "carbon fiber-containing filler (B)" is the same as the above-described amount except that the description of the "content" described above in the section of the "<Polyamide (A)>" and the "<Carbon Fiber-Containing Filler (B)>" according to the polyamide composition which is one embodiment of the present invention is changed to the "blending amount", and the preferred range thereof is also the same. Therefore, a detailed description thereof will be omitted here.

In addition, the "other components" in the production method is the same as the "<Other Components>" described above in the section of the polyamide composition which is one embodiment of the present invention, and the preferred embodiment thereof is also the same. In addition, in the production method, the blending amount when mixing the "other components" is the same as the above-described amount except that the description of the "content" in the above-described "<Other Components>" is changed to the "blending amount", and the preferred range thereof is also the same. Therefore, a detailed description thereof will be omitted here.

[Molded Article]

A molded article which is one embodiment of the present invention contains a polyamide composition.
The content of the polyamide composition in the molded article is not limited as long as the effects of the present invention are exhibited, and is preferably 50 to 100% by mass, more preferably 70 to 100% by mass, still more preferably 80 to 100% by mass, yet still more preferably 90 to 100% by mass, even yet still more preferably 95 to 100% by mass, and may be 100% by mass, with respect to 100% by mass of the molded article.
The "polyamide composition" contained in the molded article is the same as that described above in the section of the polyamide composition which is one embodiment of the present invention, and the preferred embodiment thereof is also the same.
The method for producing the molded article is not particularly limited, and a known method can be used. Specifically, a molded article can be obtained by melting a polyamide composition by heating and molding the composition into a desired shape. An additive such as a chain extender may be added during molding, and treatment such as heat treatment or electron beam crosslinking may be further carried out after molding.
The value of the amount of change $\Delta b^*$ in the $b^*$ value before and after the heat treatment of the molded article at 180°C for 240 hours is preferably 2.0 or less, more preferably 1.8 or less, still more preferably 1.6 or less, yet still more preferably 1.4 or less, even yet still more preferably 1.2 or less, and even yet still more preferably 1.0 or less. The lower limit of the value of $\Delta b^*$ is not particularly limited, and is, for example, 0.0. Here, in the description herein, when the value of $\Delta b^*$ is a negative value (minus value), the value is regarded as 0.0. In this case, in one embodiment of the present invention, the value of $\Delta b^*$ is preferably 0.0 to 2.0, more preferably 0.0 to 1.8, still more preferably 0.0 to 1.6, yet still more preferably 0.0 to 1.4, even yet still more preferably 0.0 to 1.2, and even yet still more preferably 0.0 to 1.0.
Specifically, the value of $\Delta b^*$ is a value calculated by using a method described in Examples which will be described later.

(Use of molded article)

The molded article can be used as, for example, various molded articles for electric parts, electronic parts, automobile parts, industrial parts, water faucet parts, fibers, films, sheets, household goods, leisure goods, and other parts with arbitrary shapes and applications.
Examples of the electric parts and the electronic parts include connectors such as an FPC connector, a B to B connector, a card connector, an SMT connector (such as a coaxial connector), and a memory card connector; SMT relays; SMT bobbins; sockets such as a memory socket and a CPU socket; switches such as a command switch and an SMT switch; optical components such as an optical fiber component and an optical sensor; LED application components such as an LED reflector; and electronic substrates such as a solar cell substrate, an LED-mounted substrate, a flexible printed wiring board, and a resin-molded circuit board.
Examples of the automobile parts include cooling components such as a thermostat housing, a housing for a coolant control valve, a housing for a thermal management module, a radiator tank, a radiator hose, a water outlet, a water inlet, a water pump housing, and a rear joint; intake and exhaust system components such as an intercooler tank, an intercooler case, a turbo duct pipe, an EGR cooler case, a resonator, a throttle body, an intake manifold, and a tail pipe; fuel system components such as a fuel delivery pipe, a gasoline tank, a quick connector, a canister, a pump module, a fuel pipe, an oil strainer, a lock nut, and a seal material; structural components such as a mount bracket, a torque rod, and a cylinder head cover; drive system components such as a bearing retainer, a gear tensioner, a head lamp actuator gear, a throttle valve gear, a slide door roller, and a clutch peripheral component; brake system components such as an air brake tube; in-vehicle electrical components such as a wire harness connector in an engine room, a motor component, a sensor, an ABS bobbin, a combination switch, and an in-vehicle switch; and interior and exterior parts such as a slide door damper, a door mirror stay, a door mirror bracket, an inner mirror stay, a roof rail, an engine mount bracket, an inlet pipe of an air cleaner, a door checker, a plastic chain, an emblem, a clip, a breaker cover, a cup holder, an airbag, a fender, a spoiler, a radiator support, a radiator grille, a louver, an air scoop, a hood bulge, a back door, and a fuel sender module.
Examples of the industrial parts include gas pipes, oilfield pipes, hoses, anti-termite cables (such as communication cables and pass cables), coating parts of powder coated products (such as inner coating of water pipes), submarine oilfield pipes, pressure hoses, hydraulic tubes, paint tubes, housings and impellers for fuel pumps, separators, supercharging ducts, butterfly valves, conveyor roller bearings, railroad tie spring clip supports, outboard engine covers, generator engine covers, blades for wind power generators, irrigation valves, large switches, and constructions (such as buildings, roads, bridges, water channels, and banks).

Examples of the water faucet parts include housings for components for conveying tap water, housings for components for storing tap water, housings for filter casings, housings for water outlets, housings for pipes, housings for bathroom faucets (such as valves for switching between hot and cold water and valves for switching water amount), housings for sanitary components, housings for kitchen water faucet, housings for water heaters, valve components (shut-off balls, slides, and cylinders) and valve component housings, housings for toilet water shut-off valves, housings in a showerhead, valve housings for water heaters, joints for housing equipment piping (such as underfloor piping), joints for bathroom faucets, joints for water piping, pipe joints, housings for water meters, components (bearings, propellers, and pins) for water meters and water meters, housings for gas meters, housings for distributors, valve/pump housings for household apparatuses, steam resistant components for steam irons, inner containers for electric kettles, components (washing tanks, washing nozzles, and baskets) for dishwashers, housings for pumps, pump components (for example, turbine wheels and impellers), housings for water supply systems (such as hot water tanks), housings for heating systems, housings for cooling systems, water regulating valves, pressure reducing valves, relief valves, electromagnetic valves, three-way valves, thermo-valves, sensors for measuring the temperature of hot water, sensors for measuring water amount, and bathtub adapters.

Examples of the fibers include airbag base fabric, heat-resistant filters, reinforcing fibers, brush bristles, fishing lines, fishing nets, tire cords, artificial turf, carpets, and fibers for seat sheets.

Examples of the films or sheets include heat-resistant pressure-sensitive adhesive tapes such as heat-resistant masking tapes and industrial tapes; magnetic tape materials such as cassette tapes, data storage magnetic tapes for digital data storage, and video tapes; food packaging materials such as pouches for retort foods, individual packages for confectionery, and packages for processed meat products; and electronic component packaging materials such as packages for semiconductor packages.

Examples of the household goods include valve/pump housings for tea and coffee makers; valve/pump housings for cooking appliances (such as rice cookers and steam cookers); steam-resistant components (such as an upper lid of a rice cooker) for cooking appliances (such as rice cookers and steam cookers); slide components (such as gears) of cooking appliances (such as rice cookers and steam cookers); slide components (such as a gear for a gear pump) of institutional cooking appliances; and steam-resistant components (such as a pipe for an institutional rice cooker) for institutional cooking appliances.

Examples of the leisure goods include inner soles and outer soles of sports shoes; frames and grommets of rackets; heads and sleeves of golf clubs; reels and rods of fishing goods; screws for boats; suspensions, gears, saddles, and bottle cages for bicycles.

Among the above-described molded articles, the molded article containing the polyamide composition which is one embodiment of the present invention can be particularly suitably used in applications in which the molded article is used in a high-temperature environment because the molded article can suppress discoloration in a high-temperature environment. The application used in a high-temperature environment is not particularly limited as long as the application has a chance of being used in a high-temperature environment, and examples thereof include electric parts; electronic parts; automobile parts; and industrial parts.

Examples

Next, the present invention will be more specifically described by Examples, but the present invention is not limited to these Examples.

[Evaluation of Polyamide (A)]

Methods for evaluating physical properties of the polyamide (A) used in Examples and Comparative Examples are shown below.

<Melting point>

The melting point of the polyamide (A) was measured using a differential scanning calorimeter "DSC7020" manufactured by Hitachi High-Tech Analysis Corporation.

The melting point was measured in accordance with ISO 11357-3 (second edition, 2011). Specifically, in a nitrogen atmosphere, a sample (polyamide) was heated from 30°C to 340°C at a rate of 10°C/minute, held at 340°C for 5 minutes to completely melt the sample, then cooled to 50°C at a rate of 10°C/minute, held at 50°C for 5 minutes, and then heated again to 340°C at a rate of 10°C/minute. The peak temperature of the endothermic peak appearing at that time was taken as the melting point (°C).

<Inherent viscosity>

The inherent viscosity (dl/g) of the polyamide (A) at a concentration of 0.2 g/dl and a temperature of 30°C was calculated from the following equation using concentrated sulfuric acid as a solvent.

$$\bullet \eta = [\ln(t_1/t_0)]/c$$

In the above equation, $\eta$ represents the inherent viscosity (dl/g), $t_0$ represents the flow-down time (second) of the solvent (concentrated sulfuric acid), $t_1$ represents the flow-down time (second) of a sample solution, and c represents the concentration (g/dl) of the sample in the sample solution (that is, 0.2 g/dl).

<Terminal amino group amount>

The polyamide (A) was weighed so as to be 1 g, 30 mL of phenol was added thereto, and the mixture was heated and shaken at 120°C. After the polyamide (A) was dissolved, 3.0 mL of methanol and 4 drops of thymol blue as a titrant were added and titrated with a 0.01N aqueous hydrochloric acid solution. The terminal amino group amount was calculated from the following equation (where blank = 0, factor = 1).

•Terminal amino group amount ($\mu$mol/g) = (titration amount - blank) $\times$ normality $\times$ factor $\div$ weight $\times$ 1,000

[Evaluation of Carbon Fiber-Containing Filler (B)]

Methods for evaluating physical properties of the carbon fiber-containing filler (B) used in Examples and Comparative Examples are shown below.

<Contents of Fe, K, Ni, and Co in carbon fiber-containing filler (B)>

Each content of the iron element (Fe), the potassium element (K), the nickel element (Ni), and the cobalt element (Co) contained in the carbon fiber-containing filler (B) was measured by inductively coupled plasma mass spectrometry (ICP-MS). The measurement conditions are shown below.

(Pretreatment)

In a quartz insert, 0.01 g of the carbon fiber-containing filler (B) was placed and 6 mL of nitric acid (product name: "Nitric Acid (1.42)", manufactured by FUJIFILM Wako Pure Chemical Corporation) was further added thereto. Five mL of water and 2 mL of hydrogen peroxide were placed in a decomposition vessel, and the quartz insert was immersed in the solution in the decomposition vessel. Thereafter, the decomposition vessel was sealed, and microwave decomposition was performed twice using a microwave decomposition device "ETHOS-1" (Milestone General K.K.). After completion, the quartz insert was taken out, and 1 mL of hydrochloric acid (standard "Ultrapur (registered trademark) -100", manufactured by KANTO CHEMICAL CO., INC.) was added to the quartz insert. In addition, the water and the hydrogen peroxide in the decomposition vessel were discarded, and 5 mL of water and 1 mL of hydrogen peroxide were newly placed in the decomposition vessel. The quartz insert was immersed in the solution in the decomposition vessel. Thereafter, a third microwave decomposition was performed in the same manner as described above. After being allowed to cool, the solution in the quartz insert was adjusted to 50 mL with ultrapure water and filtered through a filter having a pore size of 0.45 $\mu$m. The obtained filtrate was subjected to ICP-MS measurement.

(ICP-MS Measurement conditions)

- Apparatus name: Agirent 7900 (manufactured by Agilent Technologies, Inc.)
- RF output: 1500 W
- Carrier-gas flow rate: 0.7 L/min
- $H_2$ mode measurement element: K
- He mode measurement element: Fe, Ni, Co

- Standard solution: XSTC-622 (manufactured by SPEX)
- Standard solutions for calibration curves: 1.4 mol/L nitric acid solutions with solution concentrations of 0, 0.5, 5.0, 10.0, 30.0, and 50.0 ng/ml

The lower detection limits of Fe, K, Ni, and Co in the analysis based on ICP-MS are as follows.

- Lower detection limit of Fe: 0.066 ppm by mass
- Lower detection limit of K: 0.056 ppm by mass
- Lower detection limit of Ni: 0.004 ppm by mass
- Lower detection limit of Co: 0.001 ppm by mass

The measurement of the metal element content was performed three times, and when the content was less than the detection lower limit, the content was regarded as 0 ppm by mass, and the average value thereof was calculated and used as the measured value.

<Fiber length of carbon fiber-containing filler (B) before mixing with polyamide (A)>

The fiber lengths were measured by sandwiching both ends of the carbon fiber-containing filler (B) in the longitudinal direction with a vernier caliper and reading the displayed value.

[Production of Polyamide (A)]

<Polyamide (1)>

In an autoclave having an internal volume of 40 liters, 6055 g of terephthalic acid, 5897 g of a mixture of 1,9-nonanediamine and 2-methyl-1,8-octanediamine [1,9-nonanediamine/2-methyl-1,8-octanediamine = 80/20 (molar ratio)], 136 g of benzoic acid, 12 g of sodium hypophosphite monohydrate (0.1% by mass with respect to the total mass of the raw materials), and 5 liters of distilled water were placed and subjected to nitrogen substitution. The mixture was stirred at 100°C for 30 minutes, and the temperature inside the autoclave was then raised to 220°C over 2 hours. At this time, the pressure inside the autoclave increased to 2 MPa. Heating was continued for 5 hours while maintaining the pressure at 2 MPa, and the reaction was allowed to proceed by gradually removing the water vapor. Thereafter, the pressure was decreased to 1.3 MPa over 30 minutes, and the reaction was further conducted for 1 hour to obtain a prepolymer. The obtained prepolymer was dried at 100°C under reduced pressure for 12 hours and pulverized to a particle diameter of 2 mm or less. This was subjected to solid-phase polymerization at 230°C and 13 Pa (0.1 mmHg) to obtain a polyamide (1) having a melting point of 300°C, an inherent viscosity of 1.2 dl/g, and a terminal amino group amount of 12 $\mu$mol/g.

<Polyamide (2)>

A polyamide (2) having a melting point of 300°C, an inherent viscosity of 1.2 dl/g, and a terminal amino group amount of 68 $\mu$mol/g was obtained in the same manner as the polyamide (1) except that 6032 g of a mixture of 1,9-nonanediamine and 2-methyl-1,8-octanediamine [1,9-nonanediamine/2-methyl-1,8-octanediamine = 80/20 (molar ratio)] was used as the diamine.

<Polyamide (3)>

A polyamide (3) having a melting point of 265°C, an inherent viscosity of 1.0 dl/g, and a terminal amino group amount of 17 $\mu$mol/g was obtained in the same manner as the polyamide (1) except that 6024 g terephthalic acid, 5897 g of a mixture of 1,9-nonanediamine and 2-methyl-1,8-octanediamine [1,9-nonanediamine/2-methyl-1,8-octanediamine = 50/50 (molar ratio)], 181 g of benzoic acid, and 6 g of phosphorous acid (0.05% by mass with respect to the total mass of the raw materials) were used as the raw materials.

[Carbon Fiber-Containing Filler (B)]

The carbon fiber-containing fillers used in Examples and Comparative Examples are as follows. The following filler fiber length represents the fiber length of the carbon fiber-containing filler (B) before mixing with the polyamide.

•"CF-1"

Recycled carbon fiber "S type" (manufactured by Carbon Fiber Recycle Industry co.ltd.; filler fiber length: 3 mm; sizing agent: polyester-based; carbon fiber content: 80 to 90% by mass, sizing agent content: 1 to 3% by mass, the balance being a resin component)

•"CF-2"

Recycled carbon fiber "T type" (manufactured by Carbon Fiber Recycle Industry co.ltd.; filler fiber length: 3 mm; sizing agent: polyester-based; carbon fiber content: 80 to 90% by mass, sizing agent content: 1 to 3% by mass, the balance being a resin component)

•"CF-3"

Recycled carbon fiber "R type" (manufactured by Carbon Fiber Recycle Industry co.ltd.; filler fiber length: 3 mm; sizing agent: polyester-based; carbon fiber content: 80 to 90% by mass, sizing agent content: 1 to 3% by mass, the balance being a resin component)

•"CF-4"

Recycled carbon fiber (manufactured by Toyota Tsusho Corporation; filler fiber length: 6 mm; sizing agent: none; carbon fiber content: 80 to 95% by mass, the balance being a resin component)

•"CF-5"

Carbon fiber "PYROFIL (registered trademark) TR06NLB6R" (manufactured by Mitsubishi Chemical Corporation; filler fiber length: 6 mm; sizing agent: polyamide-based; carbon fiber content: 95 to 99% by mass; sizing agent content: 1 to 5% by mass)

•"CF-6"

Carbon fiber "PYROFIL (registered trademark) TR066AB4E" (manufactured by Mitsubishi Chemical Corporation; filler fiber length: 6 mm; sizing agent: epoxy-based; carbon fiber content: 94 to 99% by mass; sizing agent content: 1 to 6% by mass)

[Other components]

Other components used in Examples and Comparative Examples are as follows.

•Antioxidant

"SUMILIZER (registered trademark) GA-80" manufactured by SUMITOMO CHEMICAL COMPANY, LIMITED

•Smoothing agent

"LICOWAX (registered trademark) OP" manufactured by Clariant Chemicals Ltd.

•Crystal nucleating agent

"TALC ML112" manufactured by Fuji talc industrial Co., Ltd.

•Colorant

Carbon Black "#980B" manufactured by Mitsubishi Chemical Corporation

•Iron powder

"Iron powder A-131" manufactured by Hoeganaes Corporation

[Production of Polyamide Composition]

<Examples 1 to 10 and Comparative Examples 1 and 2>

The polyamide (A) and the respective components (other components) other than the carbon fiber-containing filler (B) were mixed in advance at a ratio shown in Table 1 and fed from an upstream hopper of a twin-screw extruder ("TEM-26SS" manufactured by SHIBAURA MACHINE CO., LTD.), and the carbon fiber-containing filler (B) was fed from a side feed port on the downstream side of the extruder so as to have a ratio shown in Table 1. Polyamide compositions in the form of pellets were produced by melt-kneading and extruding the mixture at a cylinder temperature 20 to 30°C higher than the melting point of the polyamide (A), followed by cooling and cutting.

Each of the obtained polyamide compositions was evaluated as follows.

[Evaluation]

<Evaluation of Discoloration Under High-Temperature Environment>

Each of the polyamide compositions obtained in Examples and Comparative Examples was molded with an injection molding machine (clamping force: 100 tons, screw diameter: ø32 mm) manufactured by Sumitomo Heavy Industries, Ltd. and a T runner mold at a cylinder temperature 20°C to 30°C higher than the melting point of the polyamide under the condition of a mold temperature of 140°C to produce a multi-purpose test piece type A1 (dumbbell-shaped test piece described in JIS K7139:2009, thickness: 4 mm, whole length: 170 mm, length of parallel section: 80 mm, width of parallel section: 10 mm).

The prepared test piece was allowed to stand in a hot-air dryer heated to 180°C for 240 hours to perform heat treatment. The b* values of the test piece subjected to the heat treatment and the test piece not subjected to the heat treatment were measured using a spectrophotometer ("SD7000", manufactured by NIPPON DENSHOKU INDUSTRIES Co., Ltd.). As conditions, a D65 light source, a reflection mode, a geometric condition c (di: 8°, de: 8°), diffuse illumination: 8° light reception, a measurement mode SCI, and a measurement diameter = ø6.4 mm were used. The b* value of the test piece subjected to the heat treatment was defined as "b* value after heat treatment", and the b* value of the test piece not subjected to the heat treatment was defined as "b* value before heat treatment". The amount of change (Δb*) in the b* value by the heat treatment was calculated from the following equation. The results are shown in Table 1.

$$\bullet \Delta b^{*} = (b^{*} \text{ value after heat treatment}) - (b^{*} \text{ value before heat treatment})$$

<Fiber length of carbon fiber-containing filler (B) in polyamide composition>

First, the polyamide contained in the polyamide composition was removed by heating treatment at 525°C using an electric oven (FUL252FA) manufactured by ADVANTEC GROUP. Next, the carbon fiber-containing filler (B) remaining after the heat treatment was dispersed on an observation table to such an extent that each carbon fiber could be confirmed, and this was observed using a microscope (VHX-6000) manufactured by KEYENCE CORPORATION to obtain an image. In the obtained image, the lengths of 1,000 carbon fiber-containing fillers (B) selected at random were measured by image processing, and the fiber length was calculated from the following equation.

$$\bullet \text{Fiber length} = (\text{total value of measured fiber lengths})/(\text{number of measured fibers})$$

The calculation results are shown as "Fiber length of (B) in the composition" in Table 1.

[Table 1]

Table 1

| | | Unit | Example 1 | Example 2 | Example 3 | Example 4 | Example 5 | Example 6 |
|---|---|---|---|---|---|---|---|---|
| (A) | Polyamide (1) | Parts by mass | 70 | 70 | 70 | 84 | 70 | - |
| | Polyamide (2) | Parts by mass | - | - | - | - | - | 70 |
| | Polyamide (3) | Parts by mass | - | - | - | - | - | - |
| (B) | CF-1 | Parts by mass | 30 | - | - | - | - | 30 |
| | CF-2 | Parts by mass | - | 30 | - | - | - | - |
| | CF-3 | Parts by mass | - | - | 30 | 16 | - | - |
| | CF-4 | Parts by mass | - | - | - | - | 30 | - |
| | CF-5 | Parts by mass | - | - | - | - | - | - |
| | CF-6 | Parts by mass | - | - | - | - | - | - |
| Others | Antioxidant | Parts by mass | 0.2 | 0.2 | 0.2 | 0.2 | 0.2 | 0.2 |
| | Smoothing agent | Parts by mass | 0.2 | 0.2 | 0.2 | 0.2 | 0.2 | 0.2 |
| | Crystal nucleating agent | Parts by mass | 0.1 | 0.1 | 0.1 | 0.1 | 0.1 | 0.1 |
| | Colorant | Parts by mass | 0.1 | 0.1 | 0.1 | 0.1 | 0.1 | 0.1 |
| | Iron powder | Parts by mass | - | - | - | - | - | - |
| Terminal amino group amount of (A) | | $\mu$mol/g | 12 | 12 | 12 | 12 | 12 | 68 |
| Fe content with respect to (A) | | ppm by mass | 12 | 17 | 11 | 5 | 23 | 12 |
| K content with respect to (A) | | ppm by mass | 9 | 9 | 13 | 6 | 12 | 9 |

(continued)

|  | | Unit | Example 1 | Example 2 | Example 3 | Example 4 | Example 5 | Example 6 |
|---|---|---|---|---|---|---|---|---|
| Ni content with respect to (A) | | ppm by mass | 0.38 | 0.15 | 0.19 | 0.08 | 0.30 | 0.38 |
| Co content with respect to (A) | | ppm by mass | 0.05 | 0.04 | 0.05 | 0.05 | 0.13 | 0.05 |
| Fe content in (B) | | ppm by mass | 28 | 40 | 26 | 26 | 53 | 28 |
| K content in (B) | | ppm by mass | 20 | 22 | 29 | 29 | 27 | 20 |
| Ni content in (B) | | ppm by mass | 0.88 | 0.35 | 0.44 | 0.44 | 0.70 | 0.88 |
| Co content in (B) | | ppm by mass | 0.11 | 0.09 | 0.11 | 0.11 | 0.30 | 0.11 |
| Fiber length of (B) in the composition | | μm | 169 | 154 | 172 | 165 | 147 | 162 |
| Δb* | | - | 1.3 | 1.1 | 0.6 | 0.8 | 1.1 | 1.7 |
|  | | Unit | Example 7 | Example 8 | Example 9 | Example 10 | Comparative Example 1 | Comparative Example 2 |
| (A) | Polyamide (1) | Parts by mass | - | 70 | 70 | 70 | 70 | 70 |
| | Polyamide (2) | Parts by mass | - | - | - | - | - | - |
| | Polyamide (3) | Parts by mass | 70 | - | - | - | - | - |
| (B) | CF-1 | Parts by mass | 30 | - | - | - | - | - |
| | CF-2 | Parts by mass | - | - | - | - | - | - |
| | CF-3 | Parts by mass | - | - | - | - | - | - |
| | CF-4 | Parts by mass | - | - | - | - | - | - |
| | CF-5 | Parts by mass | - | 30 | 30 | 30 | 30 | - |
| | CF-6 | Parts by mass | - | - | - | - | - | 30 |

(continued)

| | | Unit | Example 7 | Example 8 | Example 9 | Example 10 | Comparative Example 1 | Comparative Example 2 |
|---|---|---|---|---|---|---|---|---|
| Others | Antioxidant | Parts by mass | 0.2 | 0.2 | 0.2 | 0.2 | 0.2 | 0.2 |
| | Smoothing agent | Parts by mass | 0.2 | 0.2 | 0.2 | 0.2 | 0.2 | 0.2 |
| | Crystal nucleating agent | Parts by mass | 0.1 | 0.1 | 0.1 | 0.1 | 0.1 | 0.1 |
| | Colorant | Parts by mass | 0.1 | 0.1 | 0.1 | 0.1 | 0.1 | 0.1 |
| | Iron powder | Parts by mass | - | 0.0014 | 0.007 | 0.014 | - | - |
| Terminal amino group amount of (A) | | μmol/g | 17 | 12 | 12 | 12 | 12 | 12 |
| Fe content with respect to (A) | | ppm by mass | 12 | 21 | 101 | 201 | 1 | 1 |
| K content with respect to (A) | | ppm by mass | 9 | 3 | 3 | 3 | 3 | 2 |
| Ni content with respect to (A) | | ppm by mass | 0.38 | 0.04 | 0.04 | 0.04 | 0.04 | 0.04 |
| Co content with respect to (A) | | ppm by mass | 0.05 | 0.00 | 0.00 | 0.00 | 0.00 | 0.01 |
| Fe content in (B) | | ppm by mass | 28 | 2.7 | 2.7 | 2.7 | 2.7 | 1.5 |
| K content in (B) | | ppm by mass | 20 | 6.7 | 6.7 | 6.7 | 6.7 | 5.3 |
| Ni content in (B) | | ppm by mass | 0.88 | 0.10 | 0.10 | 0.10 | 0.10 | 0.09 |
| Co content in (B) | | ppm by mass | 0.11 | 0.00 | 0.00 | 0.00 | 0.00 | 0.02 |
| Fiber length of (B) in the composition | | μm | 172 | 188 | 183 | 195 | 186 | 192 |
| Δb* | | - | 1.5 | 1.5 | 1.6 | 1.5 | 2.2 | 2.1 |

From the results in Table 1, it can be seen that the molded articles formed from the polyamide compositions of Examples 1 to 10 have a small Δb* after heat treatment, and discoloration in a high-temperature environment can be suppressed.

On the other hand, it can be seen that the molded articles formed from the polyamide compositions of Comparative Examples 1 and 2 have a larger Δb* after heat treatment than the polyamide compositions of Examples 1 to 10, and are inferior in the effect of suppressing discoloration in a high-temperature environment.

Industrial Applicability

Since the molded article formed from the polyamide composition which is one embodiment of the present invention can suppress discoloration in a high-temperature environment, the molded article can be particularly suitably used in applications in which the molded article is used in a high-temperature environment. The application used in a high-temperature environment is not particularly limited as long as the application has a chance of being used in a high-temperature environment, and examples thereof include electric parts; electronic parts; automobile parts; and industrial parts.

**Claims**

1. A polyamide composition comprising a polyamide (A) and a carbon fiber-containing filler (B),
   wherein Fe content in the polyamide composition is 3 to 300 ppm by mass with respect to a total amount of the polyamide (A).

2. The polyamide composition according to claim 1, wherein K content in the polyamide composition is 3 ppm by mass or more with respect to a total amount of the polyamide (A).

3. The polyamide composition according to claim 1 or 2, wherein Ni content in the polyamide composition is 0.04 ppm by mass or more with respect to a total amount of the polyamide (A).

4. The polyamide composition according to any one of claims 1 to 3, wherein Co content in the polyamide composition is 0.01 ppm by mass or more with respect to a total amount of the polyamide (A).

5. The polyamide composition according to any one of claims 1 to 4, wherein the carbon fiber-containing filler (B) comprises an Fe component, and the Fe component is at least a part or all of the Fe content in the polyamide composition.

6. The polyamide composition according to any one of claims 1 to 5, wherein the carbon fiber-containing filler (B) is a recycled carbon fiber.

7. The polyamide composition according to any one of claims 1 to 6, wherein Fe content in the carbon fiber-containing filler (B) is 5 ppm by mass or more with respect to a total amount of the carbon fiber-containing filler (B).

8. The polyamide composition according to any one of claims 1 to 7, wherein the carbon fiber-containing filler (B) comprises at least one selected from the group consisting of a thermosetting resin, a modified product of a thermosetting resin, a thermoplastic resin, and a modified product of a thermoplastic resin.

9. The polyamide composition according to any one of claims 1 to 8, wherein the polyamide (A) is a polyamide comprising a diamine unit (X) and a dicarboxylic acid unit (Y),

   the diamine unit (X) comprises a diamine unit derived from an aliphatic diamine, and
   the dicarboxylic acid unit (Y) comprises a dicarboxylic acid unit derived from at least one selected from the group consisting of an aliphatic dicarboxylic acid, an alicyclic dicarboxylic acid, and an aromatic dicarboxylic acid.

10. The polyamide composition according to claim 9, wherein the diamine unit (X) comprises a diamine unit derived from an aliphatic diamine having 6 to 12 carbon atoms.

11. The polyamide composition according to claim 9 or 10, wherein the diamine unit (X) comprises a diamine unit derived from an aliphatic diamine having 9 or 10 carbon atoms.

12. The polyamide composition according to any one of claims 1 to 11, wherein a content of the carbon fiber-containing filler (B) is 1 to 50% by mass with respect to a total content of the polyamide (A) and the carbon fiber-containing filler (B).

13. The polyamide composition according to any one of claims 1 to 12, wherein a total content of the polyamide (A) and the carbon fiber-containing filler (B) is 80 to 100% by mass with respect to a total amount of the polyamide composition.

14. A molded article comprising the polyamide composition according to any one of claims 1 to 13.

15. A method for producing a polyamide composition, comprising mixing a polyamide (A) and a carbon fiber-containing filler (B) to obtain a polyamide composition,
wherein Fe content in the polyamide composition is 3 to 300 ppm by mass with respect to a total amount of the polyamide (A).

## INTERNATIONAL SEARCH REPORT

| International application No. |
| --- |
| **PCT/JP2024/018201** |

| | |
| --- | --- |
| **A.** | **CLASSIFICATION OF SUBJECT MATTER** |

*C08L 77/00*(2006.01)i; *C08K 3/04*(2006.01)i; *C08K 7/06*(2006.01)i; *C08L 101/00*(2006.01)i
FI:   C08L77/00; C08K3/04; C08K7/06; C08L101/00

According to International Patent Classification (IPC) or to both national classification and IPC

| | |
| --- | --- |
| **B.** | **FIELDS SEARCHED** |

Minimum documentation searched (classification system followed by classification symbols)

C08L77/00; C08K3/04; C08K7/06; C08L101/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2017-014397 A (ASAHI KASEI KABUSHIKI KAISHA) 19 January 2017 (2017-01-19) claims, [0021]-[0043], [0083], [0088], [0098], [0117], [0189] | 1-5, 9-15 |
| Y | | 1-15 |
| Y | WO 2020/040282 A1 (KURARAY CO., LTD.) 27 February 2020 (2020-02-27) claims, paragraphs [0102], [0103] | 2-14 |
| A | | 1,15 |
| Y | JP 2010-260995 A (ASAHI KASEI CHEMICALS CORPORATION) 18 November 2010 (2010-11-18) claims, paragraphs [0080]-[0082] | 2-14 |
| A | | 1, 15 |
| Y | WO 2020/014792 A1 (UNIVERSITY OF GUELPH) 23 January 2020 (2020-01-23) claims, p. 17 | 2-14 |
| A | | 1, 15 |

| ✓ Further documents are listed in the continuation of Box C. | ✓ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 July 2024** | **06 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
|---|
| **PCT/JP2024/018201** |

### C.    DOCUMENTS CONSIDERED TO BE RELEVANT

| Category* | Citation of document, with indication, where appropriate, of the relevant passages | Relevant to claim No. |
|---|---|---|
| Y | WO 2018/124130 A1 (KURARAY CO., LTD.) 05 July 2018 (2018-07-05)<br>        paragraph [0057] | 2-14 |
| Y | JP 2021-042339 A (SAKUMA TOKUSHUKO KK) 18 March 2021 (2021-03-18)<br>        claims, paragraphs [0019]-[0022] | 2-14 |
| A | | 1, 15 |
| Y | JP 2005-089673 A (ASAHI KASEI CHEMICALS CORPORATION) 07 April 2005<br>(2005-04-07)<br>        claims, paragraphs [0012]-[0016], [0050], [0056], [0057] | 1-12, 14-15 |
| A | | 13 |

Form PCT/ISA/210 (second sheet) (July 2022)

**INTERNATIONAL SEARCH REPORT**
Information on patent family members

International application No.

**PCT/JP2024/018201**

| Patent document cited in search report | | | Publication date (day/month/year) | Patent family member(s) | | | Publication date (day/month/year) |
|---|---|---|---|---|---|---|---|
| JP | 2017-014397 | A | 19 January 2017 | (Family: none) | | | |
| WO | 2020/040282 | A1 | 27 February 2020 | US 2021/0179778 A1 claims, paragraphs [0176], [0177] CN 112601776 A KR 10-2021-0048486 A | | | |
| JP | 2010-260995 | A | 18 November 2010 | (Family: none) | | | |
| WO | 2020/014792 | A1 | 23 January 2020 | US 2021/0261774 A1 claims, paragraphs [0086], [0087] | | | |
| WO | 2018/124130 | A1 | 05 July 2018 | US 2019/0360149 A1 paragraph [0092] EP 3564438 A1 CN 110114533 A | | | |
| JP | 2021-042339 | A | 18 March 2021 | (Family: none) | | | |
| JP | 2005-089673 | A | 07 April 2005 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005089673 A
- WO 2018101163 A
- JP 7228690 A